# EUROPÄISCHE PATENTSCHRIFT

(11) **EP 4 162 552 B1**
(45) Veröffentlichungstag und Bekanntmachung des Hinweises auf die Patenterteilung: **07.05.2025**
(21) Anmeldenummer: 21727159.2
(22) Anmeldetag: 21.05.2021
(51) Int. Cl.: H01M 8/04029, H01M 8/04111

(54) **WÄRMETAUSCHERSYSTEM ZUM BETREIBEN EINES BRENNSTOFFZELLEN-STACKS**
HEAT EXCHANGER SYSTEM FOR OPERATING A FUEL CELL STACK
SYSTÈME D'ÉCHANGEUR DE CHALEUR POUR FAIRE FONCTIONNER UN EMPILEMENT DE PILES À COMBUSTIBLE

(30) Priorität: 03.06.2020 DE 102020206918
(43) Veröffentlichungstag der Anmeldung: 12.04.2023
(73) Patentinhaber: Robert Bosch GmbH, 70442 Stuttgart (DE)
(72) Erfinder: KEMMER, Helerson, 71665 Vaihingen (DE); BRAUN, Jochen, 71296 Heimsheim (DE)
(86) Internationale Anmeldenummer: PCT/EP2021/063675
(87) Internationale Veröffentlichungsnummer: WO 2021/244881

(56) Entgegenhaltungen:
- DE-A1- 102010 008 210
- DE-A1- 102018 202 906
- DE-T2- 69 025 496
- US-A1- 2006 237 583

## Beschreibung

### Stand der Technik

Wasserstoffbasierte Brennstoffzellen gelten als Basis für ein Mobilitätskonzept der Zukunft, da sie nur Wasser emittieren und schnelle Betankungszeiten ermöglichen. Beispielsweise PEM-Brennstoffzellen (PEM engl.:"proton-exchange-membrane"; Protonen-Austausch-Membran) können mit der Kathode der Brennstoffzelle zugeführter Luft mit Sauerstoff als Oxidationsmittel und der Anode der Brennstoffzelle zugeführtem Wasserstoff als Brennstoff in einem elektrokatalytischen Elektrodenprozess betrieben werden, um elektrische Energie mit einem hohen Wirkungsgrad bereitzustellen.

Das verdichtete Kathodengas kann Temperaturen von bis 200°C erreichen. Um nachgeschaltete Komponenten, wie einen Kathodengas-Befeuchter oder den Brennstoffzellen-Stack selbst zu schützen, muss das Kathodengas durch einen Wärmetauscher, wie beispielsweise einen sogenannten Ladeluftkühler, auf <120°C abgekühlt werden. Die Patentveröffentlichungen DE 10 2018 202 906 A1 und DE 10 2010 008 210 A1 offenbaren jeweils ein Wärmeübertragersystem für Brennstoffzellensysteme, die mehrere Wärmeübertrager aufweisen.

### Offenbarung der Erfindung

Mit einer Mehrzahl von Wärmetauschern in dem zugeführten bzw. abgeführten Kathodengas kann ein Hauptkühlkreis des Brennstoffzellen-Stacks entlastet werden, eine Effizienz der Abgasenthalpierekuperation mittels einer Turbine erhöht werden, eine Effizienz einer zweiten Verdichterstufe mittels einer Zwischenkühlung verbessert werden und der Brennstoffzellen-Stack vor zu hohen Lufteintrittstemperaturen geschützt werden. Dabei muss das Ausmaß dieser Effekte für einen jeweiligen Betriebszustand des Brennstoffzellen-Stacks optimiert werden.

Entsprechend Aspekten der Erfindung wird ein Wärmetauschersystem zum Betreiben eines Brennstoffzellen-Stacks, ein Verfahren zur Steuerung des Wärmetauschersystems, eine Verwendung des Wärmetauschersystems, ein Computerprogramm und ein maschinenlesbares Speichermedium entsprechend den Merkmalen der unabhängigen Ansprüche vorgeschlagen, die zumindest zum Teil die beschriebenen Aufgaben lösen. Vorteilhafte Ausgestaltungen sind Gegenstand der abhängigen Ansprüche sowie der nachfolgenden Beschreibung.

Die Erfindung beruht auf der Erkenntnis, dass durch eine geeignete thermisch variable Kopplung zwischen den Wärmetauschern des Wärmetauschersystems die Temperaturen des zugeführten und/oder abgeführten Kathodengas für unterschiedliche Betriebsbedingungen des Brennstoffzellen-Stack optimiert werden können.

Gemäß einem Aspekt wird ein Wärmetauschersystem zum Betreiben eines Brennstoffzellen-Stacks vorgeschlagen, das einen ersten Verdichter und einen zweiten Verdichter für das dem Brennstoffzellen-Stack zugeführte Kathodengas aufweist, wobei der zweite Verdichter fluidmäßig hinter dem ersten Verdichter angeordnet ist. Weiterhin weist das Wärmetauschersystem eine Turbine auf, die mit dem zweiten Verdichter mechanisch gekoppelt ist und von dem abgeführten Kathodengas des Brennstoffzellen-Stacks angeströmt wird. Weiterhin weist das Wärmetauschersystemeinen ersten Wärmetauscher auf, der thermisch an das zugeführte Kathodengas zwischen dem ersten Verdichter und dem zweiten Verdichter gekoppelt ist und darüber hinaus einen zweiten Wärmetauscher der thermisch an das zugeführte Kathodengas hinter dem zweiten Verdichter gekoppelt ist und weiterhin einen vierten Wärmetauscher der thermisch an das abgeführte Kathodengas hinter der Turbine gekoppelt ist, wobei der vierte Wärmetauscher thermisch variabel mit dem ersten Wärmetauscher und dem zweiten Wärmetauscher gekoppelt ist, um einen Wärmeaustausch zur Kühlung des ersten Wärmetauschers und des zweiten Wärmetauschers zu steuern.

Eine solche variable thermische Kopplung kann durch Gas-Kühlmittel Wärmetauscher, mittels des Austausches des Kühlmittels zwischen den Wärmetauschern, durch Gas-Gas-Wärmetauscher, mittels Austausch von Gasströmen zwischen den Wärmetauschern oder andere thermische Kopplungen zwischen den Wärmetauschern, wie beispielsweise durch unterschiedlich wärmeleitende Materialien oder variable Kontaktflächen, für einen Wärmeaustausch zwischen den Wärmetauschern, erreicht werden. Unter einer variablen thermischen Kopplung kann insbesondere eine thermische Kopplung verstanden werden, die im laufenden Betrieb verändert werden kann, aber darüber hinaus auch eine thermische Kopplung, die thermische Kopplungen innerhalb des Wärmetauschersystems konstruktiv variabel einstellen lässt. Letzteres insbesondere durch Einsatz von Drosseln in Fluidströmen, Kontaktflächen zwischen Wärmetauschern etc.

Richtungsangaben beziehen sich dabei auf eine Richtung der betroffenen Fluide.

Mit einem solchen Wärmetauschersystem kann insbesondere eine Temperatur von Kathodengas-Strömen innerhalb des Wärmetauschersystems optimiert werden.

Insbesondere kann eine Temperatur des Kathodengases zwischen dem ersten Verdichter und dem zweiten Verdichter durch die variable thermische Kopplung auf ein möglichst niedriges Temperaturniveau gebracht werden, um eine bessere Effizienz des zweiten Verdichters zu erreichen, woraus auch eine Entlastung der elektrischen Verdichtung resultiert. Dadurch, dass weniger Energie für die Verdichtung aufgewandt werden muss, kann eine Leistung des Brennstoffzellen-Stacks reduziert werden, woraus reduzierte Kosten resultieren.

Vorteilhafterweise resultiert aus der variablen thermischen Kopplung, dass die Kühlung des Kathodengases nach dem zweiten Verdichter auf ein möglichst niedriges Temperaturniveau gebracht werden kann, um einen besonders guten Schutz des Brennstoffzellen-Stacks vor thermischer Degradation und somit eine Erhöhung der Lebensdauer zu ermöglichen. Darüber hinaus ergibt sich vorteilhaft eine Entlastung des Hauptkühlkreises, da ein Teil der Kühlleistung mit der Kathodenluft erreicht wird.

Vorteilhafterweise bewirkt der vierte Wärmetauscher, dass das abgeführte Kathodengas vor einem Auspuff auf ein höheres Temperaturniveau erwärmt wird, um Wassertropfen aus dem Auspuff zu vermindern.

Gemäß einem Aspekt wird vorgeschlagen, dass das Wärmetauschersystem einen dritten Wärmetauscher aufweist, der mit dem abgeführten Kathodengas in Fluidrichtung vor der Turbine thermisch gekoppelt ist, und wobei der erste Wärmetauscher und der zweite Wärmetauscher thermisch variabel mit dem dritten Wärmetauscher gekoppelt sind, um einen Wärmeaustausch zum Erhitzen des dritten Wärmetauschers zu steuern.

Mit der thermisch variablen Kopplung kann eine Erwärmung des abgeführten Kathodengases vor der Turbine auf möglichst hohes Temperaturniveau optimiert werden, um eine bessere Effizienz der Turbine und dadurch eine Entlastung der elektrischen Verdichtung zu bewirken. Auch hierbei ist durch die verringerte notwendige elektrische Leistung für die Verdichtung des Kathodengases eine Reduzierung der Leistung des Brennstoffzellen-Stacks möglich woraus auch eine Reduzierung der Kosten folgen kann.

Der vierte Wärmetauscher ist sowohl mit dem ersten Wärmetauscher als auch mit dem zweiten Wärmetauscher mittels eines Kühlmittels und eines ersten Dreiwegeventils thermisch variabel gekoppelt, um das Kathodengas vor respektive nach dem zweiten Verdichter zu kühlen.

Das durch den ersten Wärmetauscher gekühlte Kühlmittel kann durch das Dreiwegeventil so aufgeteilt werden, dass sowohl das Kathodengas nach dem ersten Wärmetauscher als auch nach dem zweiten Wärmetauscher ca. 70°C abgekühlt werden.

Gemäß einem Aspekt wird vorgeschlagen, dass der erste Wärmetauscher und der zweite Wärmetauscher thermisch variabel mit dem dritten Wärmetauscher mittels eines Kühlmittels und eines zweiten Dreiwegeventils gekoppelt sind, um dem abgeführten Kathodengas vor der Turbine Wärme zuzuführen.

Durch ein zweites Dreiwegeventil können die Kühlmittelströme vom ersten und zweiten Wärmetauscher optimiert zusammengemischt werden, so dass der dritte Wärmetauscher das abgeführte Kathodengas aus dem Brennstoffzellen-Stack auf ein hohes Temperaturniveau bringen kann.

Gemäß einem Aspekt wird vorgeschlagen, dass der zweite Wärmetauscher thermisch mit dem dritten Wärmetauscher mittels eines Kühlmittels thermisch gekoppelt ist, um dem abgeführten Kathodengas vor der Turbine Wärme zuzuführen.

Mit anderen Worten wird durch die direkte fluidmäßige Kopplung des Kühlmittels zwischen dem zweiten und dem dritten Wärmetauscher eine besonders direkte thermische Kopplung erreicht, die beispielsweise mittels einer einstellbaren Drossel in der fluidmäßigen Verbindung oder einem Durchmesser der fluidmäßigen Verbindung zwischen den beiden Wärmetauschern eingestellt werden kann.

Hiermit kann die Temperatur vor der Turbine erhöht werden, um die Effizienz der Turbine zu verbessern.

Gemäß einem Aspekt wird vorgeschlagen, dass das Wärmetauschersystem eine Kühlmittelpumpe aufweist, und die thermische Kopplung mittels des Kühlmittels eingerichtet ist, einen Fluss des Kühlmittels zwischen dem ersten bis vierten Wärmetauscher mittels der Kühlmittelpumpe zu bewirken.

Gemäß einem Aspekt wird vorgeschlagen, dass das Wärmetauschersystem einen fünften Wärmetauscher aufweist, der mit dem abgeführten Kathodengas in Fluidrichtung vor dem dritten Wärmetauscher thermisch gekoppelt ist und mit dem ersten Wärmetauscher thermisch gekoppelt ist, um Wärme aufzunehmen. Dabei kann insbesondere die Kopplung zwischen dem ersten Wärmetauscher und dem fünften Wärmetauscher thermisch variabel eingerichtet sein.

Gemäß einem Aspekt wird vorgeschlagen, dass der fünfte Wärmetauscher mit dem ersten Wärmetauscher mittels des Kühlmittels thermisch gekoppelt ist.

Gemäß einem Aspekt wird vorgeschlagen, dass zwischen die thermische Kopplung des vierten Wärmetauschers mit dem ersten und dem zweiten Wärmetauscher eine thermische Kopplung mit einem Kühler-Aggregat eingefügt ist.

Somit kann erreicht werden, dass auch weitere Aggregate optimiert gekühlt werden.

Gemäß einem Aspekt wird vorgeschlagen, dass das Kühler-Aggregat einen Leistungselektronik-Kühler und/oder einen Inverter-Kühler und/oder Motor-Kühler und/oder einen Wandler-Kühler aufweist.

Die Rotor-Welle Einheiten als ein Beispiel für einen Motor-Kühler, die sowohl Elektro-Motor-angetrieben als auch Turbinen-angetrieben sein können, müssen aufgrund von Verlusten bzw. Reibung im Rotor-Welle-System, z.B. Lagerverluste aufgrund der hohen Drehzahlen, gekühlt werden.

Die hier gelisteten Kühler können sowohl seriell als auch parallel als auch gemischt seriell und parallel thermisch gekoppelt sein.

Da insbesondere die Leistungselektronik aber auch die Rotor-Welle-Einheiten ein niedriges Temperaturniveau erfordern, kann das niedrigste Temperaturniveau des Wärmetauschersystems dazu verwendet werden, zunächst die Leistungselektronik und danach die Rotor-Wellen-Einheiten zu kühlen. D. h., dass sowohl eine sequentielle Verschaltung als auch parallele Verschaltung der thermischen Kopplung möglich ist.

Vorteilhafterweise ist somit eine Integration weiterer Wärmequellen in das Gesamtkonzept des Wärmetauschersystems mit einer ganzheitlichen

Optimierung möglich.

Darüber hinaus ist eine bauliche Integration in ein Luftmodul möglich, welches die Luftverdichtungskomponenten sowie die Wärmeübertrager-Komponenten des Wärmetauschersystems sowohl kompakt als auch integriert enthält.

Weiterhin können sich Vorteile in Bezug auf einen notwendigen Bauraum ergeben, da für die Kühlung der Leistungselektronik bzw. der Rotor-Welleneinheit d. h. der Motor-Kühlung keine separaten Anschlüsse an ein weiteres Kühlsystem erforderlich sind.

Es wird ein Verfahren zur Steuerung eines oben beschriebenen Wärmetauschersystems vorgeschlagen, wobei das Wärmetauschersystem einen ersten Temperatursensor und einen zweiten Temperatursensor aufweist, und der erste Temperatursensor angeordnet ist, eine Temperatur des zugeführten Kathodengases vor dem zweiten Verdichter zu messen und der zweite Temperatursensor angeordnet ist, eine Temperatur des abgeführten Kathodengases vor der Turbine zu messen. Dabei wird das erste und/oder zweite Dreiwegeventil so gesteuert, dass die Temperatur des zweiten Temperatursensors maximal wird und/oder die Temperatur des ersten Temperatursensors minimal wird.

Es wird eine Verwendung eines oben beschriebenen Wärmetauschersystems zur Versorgung einer mobilen Plattform mit elektrischer Energie vorgeschlagen.

Eine mobile Plattform kann ein zumindest teilweise automatisiertes System sein, das mobil ist, und/oder ein Fahrerassistenzsystem. Ein Beispiel kann ein zumindest teilweise automatisiertes Fahrzeug bzw. ein Fahrzeug mit einem Fahrerassistenzsystem sein. Das heißt, in diesem Zusammenhang beinhaltet ein zumindest teilweise automatisiertes System eine mobile Plattform in Bezug auf eine zumindest teilweise automatisierte Funktionalität, aber eine mobile Plattform beinhaltet auch Fahrzeuge und andere mobile Maschinen einschließlich Fahrerassistenzsysteme Weitere Beispiele für mobile Plattformen können Fahrerassistenzsysteme mit mehreren Sensoren, mobile Multisensor-Roboter wie z.B. Roboterstaubsauger oder Rasenmäher, ein Multisensor-Überwachungssystem, eine Fertigungsmaschine, ein persönlicher Assistent oder ein Zugangskontrollsystem sein. Jedes dieser Systeme kann ein vollständig oder teilweise autonomes System sein.

Da eine effektive Verwendung von elektrischer Energie für den Betrieb eines Brennstoffzellensystems insbesondere bei mobilen Plattformen relevant ist, ergeben sich die Vorteile eines solchen Systems insbesondere für die elektrische Versorgung einer mobilen Plattform.

Das beschriebene Wärmetauschersystem zum Betreiben eines Brennstoffzellen-Stacks kann auch für stationäre Anwendungen eingesetzt werden.

Es wird ein Computerprogramm vorgeschlagen, das Befehle umfasst, die bei der Ausführung des Programms durch einen Computer diesen veranlassen, eines der oben beschriebenen Verfahren auszuführen. Ein solches Computerprogramm ermöglicht einen einfachen Einsatz des beschriebenen Verfahrens in unterschiedlicher Systemen.

Es wird ein maschinenlesbares Speichermedium angegeben, auf dem das oben beschriebene Computerprogramm gespeichert ist.

Im Folgenden werden Ausführungsbeispiele der Erfindung anhand der Figuren 1 bis 7 näher erläutert. Hierbei zeigt die:
- Figur 1: ein Wärmetauschersystem zum Betreiben eines Brennstoffzellen-Stacks;
- Figur 2: eine Abwandlung des Wärmetauschersystems zum Betreiben eines Brennstoffzellen-Stacks;
- Figur 3: eine weitere Abwandlung des Wärmetauschersystems zum Betreiben eines Brennstoffzellen-Stacks;
- Figur 4: eine weitere Abwandlung des Wärmetauschersystems zum Betreiben eines Brennstoffzellen-Stacks;
- Figur 5: eine weitere Abwandlung des Wärmetauschersystems zum Betreiben eines Brennstoffzellen-Stacks;
- Figur 6: eine weitere Abwandlung des Wärmetauschersystems zum Betreiben eines Brennstoffzellen-Stacks; und
- Figur 7: eine weitere Abwandlung des Wärmetauschersystems zum Betreiben eines Brennstoffzellen-Stacks.

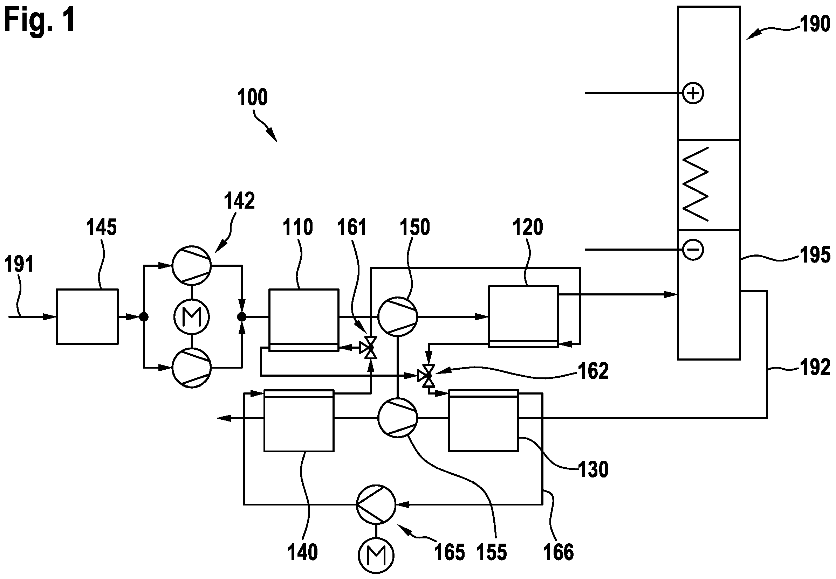

Die Figur 1 skizziert ein Wärmetauschersystem 100 zum Betreiben eines Brennstoffzellen-Stacks mit einer Kathodenseite 195 des Brennstoffzellen-Stacks 190, einem ersten Verdichter 142 und einem zweiten Verdichter 150, der mechanisch mit einer Turbine 155 gekoppelt ist.

In einem Kathodenpfad wird ein Kathodengas der stromaufwärts liegenden Kathodenseite 195 des Brennstoffzellen-Stacks 190 zugeführt und stromabwärts der Kathodenseite 195 in die Umgebung geleitet.

Stromaufwärts wird für die Versorgung der Kathodenseite 195 des Brennstoffzellen-Stacks 190 Luft als Kathodengas aus der Umgebung 191 über einen Luftfilter 145 geführt, um schädliche Partikeln und insbesondere schädliche chemische Verbindungen aus der Luft zu filtern. Mittels eines ersten Verdichters 142, der mit einem Motor M angetrieben wird, wird ein Kathodengas-Strom der gefilterten Luft einem ersten Wärmetauscher 110 zugeführt, der thermisch mit dem Kathodengas-Strom gekoppelt ist. Der erste Wärmetauscher 110 nimmt Wärme aus dem komprimierten Kathodengas-Strom auf, um das durch den ersten Verdichter 142 erwärmte Kathodengas vor der zweiten Verdichtung mittels eines zweiten Verdichters 150 zu kühlen, um die Effizienz des Verdichtungsvorgangs des Kathodengas-Stroms zu erhöhen. Diese Wärme koppelt der erste Wärmetauscher 110 an ein Kühlmittel, dass thermisch mit dem ersten Wärmetauscher 110 gekoppelt ist. Der abgekühlte Kathodengas-Strom wird dem zweiten Verdichter 150 zugeführt, um weiter verdichtet zu werden.

Mittels des zweiten Verdichters 150, der beispielsweise ohne einen Motor angetrieben wird, wird der weiter verdichtete Kathodengas-Strom einem zweiten Wärmetauscher 120 zugeführt, der thermisch mit dem weiter verdichteten Kathodengas-Strom gekoppelt ist.

Der zweite Wärmetauscher 120 nimmt Wärme aus dem weiter verdichteten Kathodengas-Strom auf, um das durch den zweiten Verdichter 150 erwärmte Kathodengas zu kühlen, um eine Eintrittstemperatur des Kathodengas-Stroms in die Kathodenseite 195 des Brennstoffzellen-Stacks 190 zu kontrollieren. Diese Wärme koppelt der zweite Wärmetauscher 120 an das Kühlmittel, das thermisch mit dem zweiten Wärmetauscher 120 gekoppelt ist. Dieser wiederum abgekühlte Kathodengas-Strom wird zu einem Eingangsanschluss der Kathodenseite 195 des Brennstoffzellen-Stacks 190 geleitet.

Stromabwärts des Brennstoffzellen-Stacks 190 wird der Kathodengas-Strom über einen Ausgangsanschluss 192 der Kathodenseite 195 des Brennstoffzellen-Stacks 190, einem dritten Wärmetauscher 130 zugeführt, der thermisch mit dem aus der Kathodengas-Seite 195 des Brennstoffzellen-Stacks 190 abgeführten Kathodengas-Strom gekoppelt ist.

Der dritte Wärmetauscher 130 gibt Wärme an den abgeführten Kathodengas-Strom ab, um den abgeführten Kathodengas-Strom zu erwärmen, damit eine Temperatur des abgeführten Kathodengas-Stroms für einen effektiven Betrieb der stromabwärts angeordneten Turbine erhöht wird. Diese Wärme koppelt der dritte Wärmetauscher 130 aus dem Kühlmittel, das thermisch mit dem dritten Wärmetauscher 130 gekoppelt ist. Dieser erwärmte abgeführte Kathodengas-Strom wird zur Turbine 155 für einen Betrieb der Turbine 155 zur Rekuperation von Energie aus dem abgeführten Kathodengas-Strom geführt.

Aus der Turbine 155 wird der entspannte Kathodengas-Strom einem vierten Wärmetauscher 140 zugeführt, der thermisch mit dem entspannten Kathodengas-Strom gekoppelt ist.

Der vierte Wärmetauscher 140 ist mit dem Kühlmittel thermisch gekoppelt und gibt Wärme aus dem Kühlmittel an den entspannten Kathodengas-Strom ab, um die Temperatur des Kühlmittels zu senken.

Der auf diese Weise erwärmte, stromabwärts der Kathodenseite 195 des Brennstoffzellen-Stacks 190 fließende Kathodengas-Strom, der aus dem vierten Wärmetauscher 140 austritt, wird dann an die Umgebung des Brennstoffzellen-Stacks 190 abgegeben.

Das gekühlte Kühlmittel, das aus dem vierten Wärmetauscher 140 austritt, wird über ein erstes Dreiwegeventil 161 sowohl dem ersten Wärmetauscher 110 als auch dem zweiten Wärmetauscher 120 zugeführt und kann durch das steuerbare Dreiwegeventil 161 eine thermisch variable Kopplung des vierten Wärmetauschers 140 mit dem ersten Wärmetauscher 110 und dem zweiten Wärmetauscher 120 bereitstellen.

Das erwärmte Kühlmittel, das aus dem ersten Wärmetauscher 110 und dem zweiten Wärmetauscher 120 austritt, wird über ein zweites steuerbares Dreiwegeventil 162 dem dritten Wärmetauscher 130 zugeführt und kann dadurch eine thermisch variable Kopplung des ersten Wärmetauschers 110 und des zweiten Wärmetauschers 120 mit dem dritten Wärmetauscher 130 bereitstellen. Somit kann mittels einer Steuerung des ersten Dreiwegeventils 161 und des zweiten Dreiwegeventils 162 der Wärmeaustausch zwischen den Wärmetauschern so gesteuert werden, dass der Wärmeaustausch für unterschiedliche Betriebsbedingungen des Brennstoffzellen-Stacks optimiert werden kann.

Mittels einer Kühlmittelpumpe 165, die den Kühlmittel-Ausgang des Kühlmittels des dritten Wärmetauschers 130 mit dem Kühlmittel-Eingang des vierten Wärmetauschers 140 fluidmäßig verbindet, kann das Kühlmittel in dem beschriebenen Kühlmittelkreislauf umgepumpt und damit ausgetauscht werden. Damit ist der Kühlkreislauf geschlossen. Die Kühlmittelpumpe 165 kann auch in einer anderen Position eingebaut werden, z.B. zwischen Wärmetauscher 140 und Dreiwegventil 161.

Dabei können alle Wärmetauscher 110,120,130,140 mit dem Kühlmittel in Bezug auf den Kathodengas-Strom im Gegenstromprinzip betrieben werden.

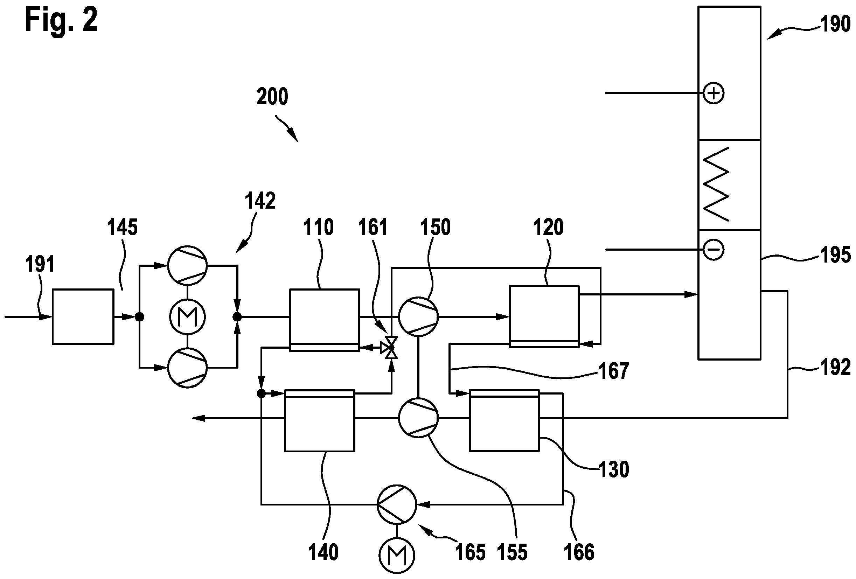

Die Figur 2 skizziert ein Wärmetauschersystem 200 als eine Abwandlung gegenüber dem vorher beschriebenen Wärmetauschersystem 100, in dem der Kühlmittel-Ausgang des zweiten Wärmetauschers 120 direkt über eine fluidmäßige Verbindung 167 mit dem Kühlmittel-Eingang des dritten Wärmetauschers verbunden ist. Da dieses abgewandelte Wärmetauschersystem 200 nur ein erstes Dreiwegeventil 161 aufweist ist der Kühlmittel-Ausgang des ersten Wärmetauschers 110 bildmäßig direkt mit dem Kühlmittel-Eingang des vierten Wärmetauschers 140 gekoppelt. Somit kann in dem Wärmetauschersystem 200 mittels des ersten Dreiwegeventils 161 die variable thermische Kopplung zwischen dem vierten Wärmetauscher 140 und dem ersten Wärmetauscher 110 sowie dem zweiten Wärmetauscher 120 bereitgestellt werden.

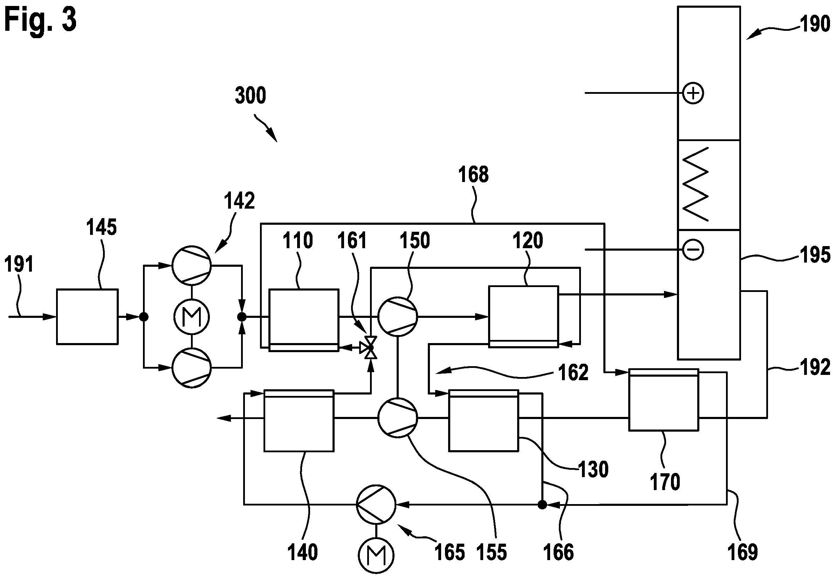

Die Figur 3 skizziert ein Wärmetauschersystem 300 das als eine Abwandlung gegenüber dem in der Figur 2 beschriebenen System 200, einen fünften Wärmetauscher 170 aufweist, der mit dem abgeführten Kathodengas in Fluidrichtung vor dem dritten Wärmetauscher thermisch gekoppelt ist und mit dem ersten Wärmetauscher thermisch gekoppelt ist, um Wärme aufzunehmen. Dabei ist diese thermische Kopplung durch eine fluidmäßige Verbindung des Kühlmittel-Ausgangs des ersten Wärmetauschers 110 mit einem Kühlmittel-Eingang des fünften Wärmetauschers 170 realisiert und der Kühlmittel-Ausgang ist über eine fluidmäßige Verbindung 169 sowohl mit dem Kühlmittel-Ausgang 166 des dritten Wärmetauschers 130 als auch mit einem Eingang der Kühlmittelpumpe 165 gekoppelt. Daraus resultiert das sowohl der Kühlmittelstrom aus dem dritten Wärmetauscher 130 als auch aus dem fünften Wärmetauscher 170 gemeinsam in den Eingang der Kühlmittelpumpe 165 fließen.

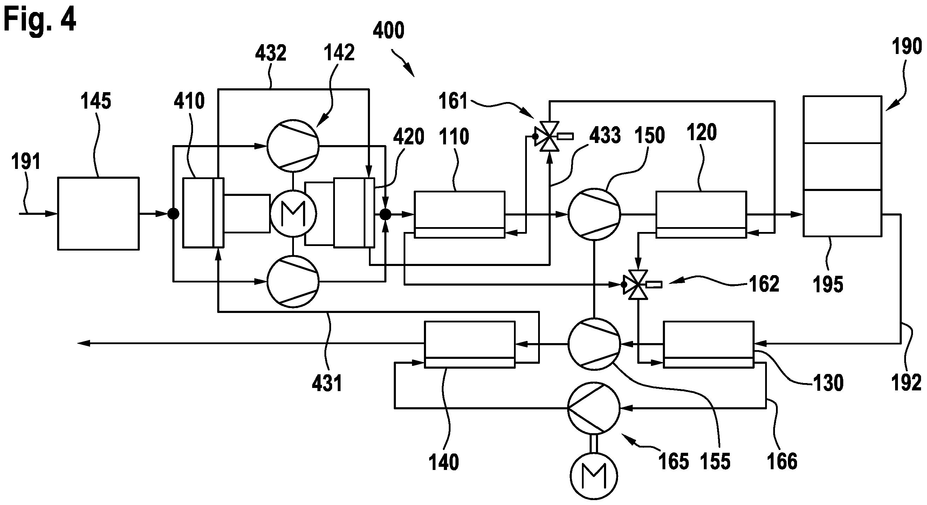

Die Figur 4 skizziert ein Wärmetauschersystem 400 das als eine Abwandlung gegenüber dem in der Figur 1 beschriebenen System 100, bei dem zwischen die thermische Kopplung des vierten Wärmetauschers 140 mit dem ersten Wärmetauscher 110 und dem zweiten Wärmetauscher 120 eine thermische Kopplung mit einem Kühler-Aggregat eingefügt ist. Dabei weist das Kühleraggregat einen Leistungselektronik-Kühler und einen Motor-Kühler auf. Diese thermische Kopplung ist in dem Wärmetauschersystem 400 dadurch realisiert, dass der Kühlmittel-Ausgang des vierten Wärmetauschers 140 erst mit dem Leistungselektronik-Kühler 410 fluidmäßig gekoppelt ist, um eine Leistungselektronik zu kühlen und nachfolgend fluidmäßig mit dem Motor-Kühler 420 gekoppelt ist, um den Motor zu kühlen. Ein Kühlmittel-Ausgang des Motor-Kühlers 420 ist dann mit dem ersten Dreiwegeventil 161 fluidmäßig gekoppelt.

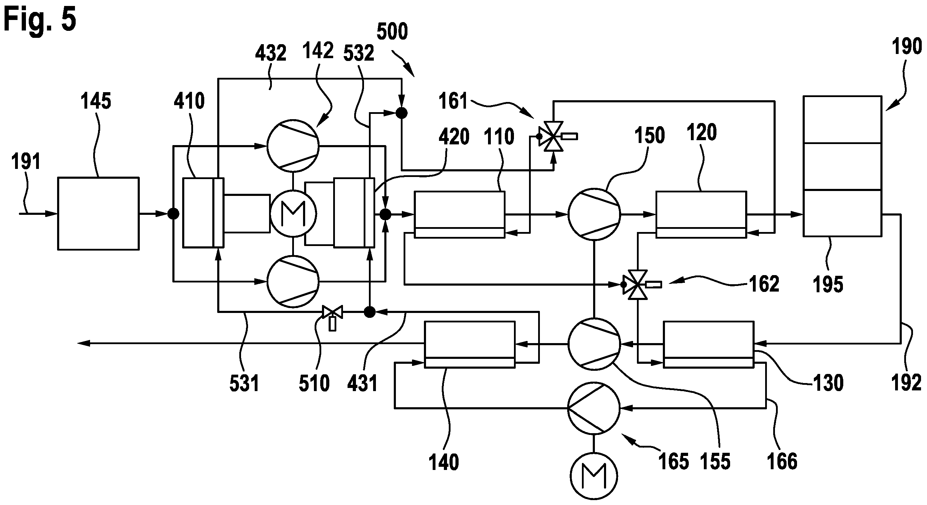

Die Figur 5 skizziert ein Wärmetauschersystem 500 das als eine Abwandlung gegenüber dem in der Figur 4 beschriebenen System 400, den Kühlmittel-Ausgang des vierten Wärmetauschers 140 parallel mit dem Leistungselektronik-Kühler und mit dem Motor-Kühler 420 koppelt. Dabei weist die fluidmäßige Kopplung 531 des Leistungselektronik-Kühlers 410 mit dem vierten Wärmetauscher 140 eine Drossel 510 auf, um die thermische Kopplung zwischen dem Leistungselektronik-Kühler 410 und dem Motor-Kühler 420 einzustellen. Die beiden Kühlmittel-Ausgänge des Leistungselektronik-Kühlers 410 und des Motor-Kühlers 420 werden fluidmäßig zusammengeführt und dem ersten Dreiwegeventil 161 zugeführt. Der Unterschied zu dem Wärmetauschersystem 400 besteht also in einer parallelen Führung des Kühlmittels durch die beiden Kühler 410 und 420.

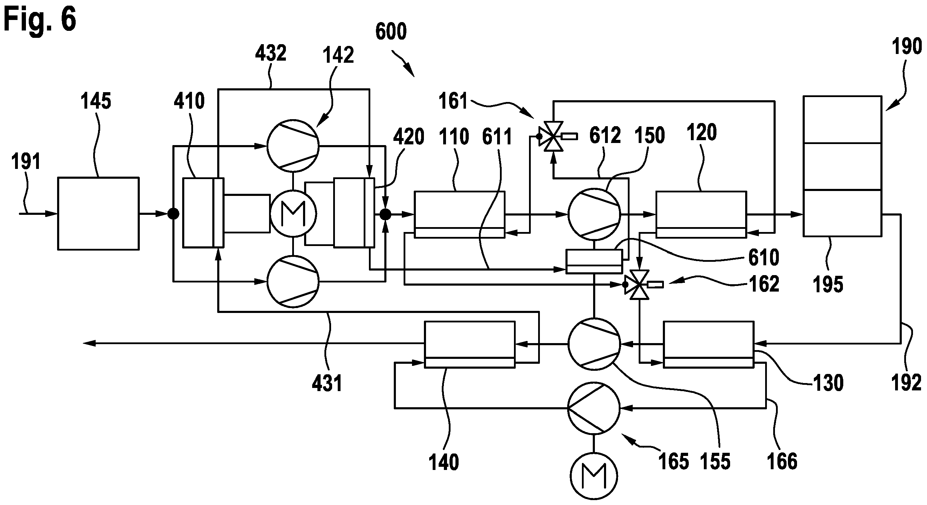

Die Figur 6 skizziert ein Wärmetauschersystem 600 das als eine Abwandlung gegenüber dem in der Figur 4 beschriebenen System 400, einen Motor-Kühler 610 für den zweiten Verdichter 150 aufweist, der fluidmäßig und thermisch seriell zwischen den vierten Wärmetauscher 140 und das erste Dreiwegeventil 161 gekoppelt ist. D. h. der Kühlmittel-Ausgang des Motor-Kühlers 420 ist mit einem Kühlmittel-Eingang des Motor-Kühlers 610 fluidmäßig gekoppelt und ein Kühlmittel-Ausgang des Motor-Kühlers 610 ist fluidmäßig mit dem ersten Dreiwegeventil 161 gekoppelt.

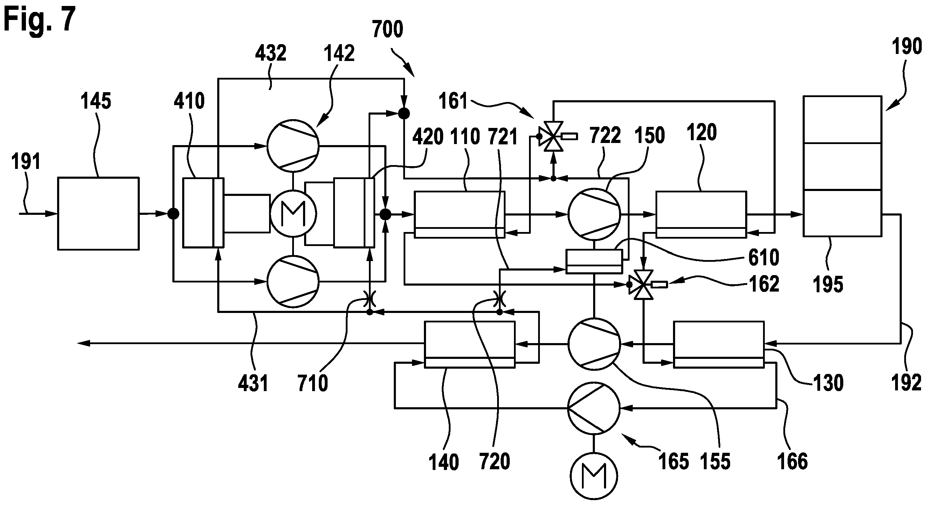

Die Figur 7 skizziert ein Wärmetauschersystem 700 das als eine Abwandlung gegenüber dem in der Figur 5 beschriebenen System 500, eine fluidmäßig und thermisch parallele Kopplung des vierten Wärmetauschers 140 mit zum einen dem Leistung Elektronik-Kühler 410 und dem Motor-Kühler 420 und zum anderen mit dem Motor-Kühler 610 des zweiten Verdichters 150 aufweist. D. h. der Kühlmittelstrom, der aus dem Kühlmittel-Ausgang des vierten Wärmetauschers austritt wird zum einen in die fluidmäßig parallele Kopplung des Leistungselektronik-Kühlers 410 und des Motor-Kühlers 420 und zum anderen fluidmäßig parallel durch den Motor-Kühler 610 des zweiten Verdichters 150 geführt und der jeweilige parallel laufende Kühlmittel-Zweig am ersten Dreiwegeventil 161 zusammengeführt. Dabei kann der Kühlmittelfluss zwischen den parallel laufenden Kühlmittel-Zweigen mittels einer ersten Drossel 710, die in einer Kühlmittel-Zuführung zu der Motorkühlung 420 angeordnet ist, und einer zweiten Drossel 720, die in einer Kühlmittel-Zuführung von dem vierten Wärmetauscher 140 und dem Motor-Kühler 610 des zweiten Verdichters 150 angeordnet ist, aufgeteilt werden und somit die thermische Kopplung in den zwei Kühlmittel-Zweigen eingestellt werden.

Der Fachmann erkennt, dass neben den hier dargestellten Topologien des Wärmetauschersystems zum Betreiben eines Brennstoffzellen-Stacks die erfinderische Lehre auch mit anderen Topologien realisiert werden kann. Wie beispielsweise mit einem Luftsystem mit mehrfacher Verdichtung oder einer anderen Schaltung von Pumpen und Ventilen.

## Patentansprüche

1. Wärmetauschersystem (100, 200, 300, 400, 500, 600, 700) zum Betreiben eines Brennstoffzellen-Stacks (190),
aufweisend:
einen ersten Verdichter (142) und einen zweiten Verdichter (150) für das dem Brennstoffzellen-Stack (190) zugeführte Kathodengas, wobei der zweite Verdichter (150) fluidmäßig hinter dem ersten Verdichter (142) angeordnet ist;
eine Turbine (155), die mit dem zweiten Verdichter (150) mechanisch gekoppelt ist und von dem abgeführten Kathodengas des Brennstoffzellen-Stacks (190) angeströmt wird;
einen ersten Wärmetauscher (110), der thermisch an das zugeführte Kathodengas zwischen dem ersten Verdichter (142) und dem zweiten Verdichter (150) gekoppelt ist;
einen zweiten Wärmetauscher (120) der thermisch an das zugeführte Kathodengas hinter dem zweiten Verdichter (150) gekoppelt ist;
einen vierten Wärmetauscher (140) der thermisch an das abgeführte Kathodengas hinter der Turbine (155) gekoppelt ist; wobei
der vierte Wärmetauscher (140) thermisch variabel mit dem ersten Wärmetauscher (110) und dem zweiten Wärmetauscher (120) gekoppelt ist, um einen Wärmeaustausch zur Kühlung des ersten Wärmetauschers (110) und des zweiten Wärmetauschers (120) zu steuern,
**dadurch gekennzeichnet, daß**
der vierte Wärmetauscher (140) sowohl mit dem ersten Wärmetauscher (110) als auch mit dem zweiten Wärmetauscher (120) mittels eines Kühlmittels und eines ersten Dreiwegeventils (161) thermisch variabel gekoppelt ist, um das Kathodengas vor respektive nach dem zweiten Verdichter (150) zu kühlen.

2. Wärmetauschersystem (100, 200, 300, 400, 500, 600, 700) gemäß Anspruch 1, das einen dritten Wärmetauscher (130) aufweist, der mit dem abgeführten Kathodengas in Fluidrichtung vor der Turbine(155) thermisch gekoppelt ist, und wobei der erste Wärmetauscher (110) und der zweite Wärmetauscher (120) thermisch variabel mit dem dritten Wärmetauscher (130) gekoppelt sind, um einen Wärmeaustausch zum Erhitzen des dritten Wärmetauschers (130) zu steuern.

3. Wärmetauschersystem (100, 200, 400, 500, 600, 700) gemäß Anspruch 1 oder 2, wobei der erste Wärmetauscher (110) und der zweite Wärmetauscher (120) thermisch variabel mit dem dritten Wärmetauscher (130) mittels eines Kühlmittels und eines zweiten Dreiwegeventils (162) gekoppelt sind, um dem abgeführten Kathodengas vor der Turbine (155) Wärme zuzuführen.

4. Wärmetauschersystem (100, 200, 300, 400, 500, 600, 700) gemäß Anspruch 1 oder 2, wobei der zweite Wärmetauscher (120) thermisch mit dem dritten Wärmetauscher (130) mittels eines Kühlmittels thermisch gekoppelt ist, um dem abgeführten Kathodengas vor der Turbine (155) Wärme zuzuführen.

5. Wärmetauschersystem (100, 200, 300, 400, 500, 600, 700) gemäß einem der vorhergehenden Ansprüche, das eine Kühlmittelpumpe (165) aufweist, und die thermische Kopplung mittels des Kühlmittels eingerichtet ist, einen Fluss des Kühlmittels zwischen dem ersten bis vierten Wärmetauscher (110, 120, 130, 140) mittels der Kühlmittelpumpe (165) zu bewirken.

6. Wärmetauschersystem (300) gemäß Anspruch 4, mit einem fünften Wärmetauscher (170), der mit dem abgeführten Kathodengas in Fluidrichtung vor dem dritten Wärmetauscher (130) thermisch gekoppelt ist und mit dem ersten Wärmetauscher (110) thermisch gekoppelt ist, um Wärme aufzunehmen.

7. Wärmetauschersystem (300) gemäß Anspruch 6, wobei der fünfte Wärmetauscher (170) mit dem ersten Wärmetauscher (110) mittels des Kühlmittels thermisch gekoppelt ist.

8. Wärmetauschersystem (400, 500, 600, 700) gemäß einem der vorhergehenden Ansprüche, wobei zwischen die thermische Kopplung des vierten Wärmetauschers (140) mit dem ersten (110) und dem zweiten Wärmetauscher (120) eine thermische Kopplung mit einem Kühler-Aggregat eingefügt ist.

9. Wärmetauschersystem (400, 500, 600, 700) gemäß Anspruch 8, wobei das Kühler-Aggregat einen Leistungselektronik-Kühler (410) und/oder einen Inverter-Kühler und/oder einen Motor-Kühler (420) und/oder einen Wandler-Kühler aufweist.

10. Verfahren zur Steuerung eines Wärmetauschersystems (100, 200, 300, 400, 500, 600, 700) gemäß einem der vorhergehenden Ansprüche, wobei das Wärmetauschersystem (100, 200, 300, 400, 500, 600, 700) einen ersten Temperatursensor und einen zweiten Temperatursensor aufweist, und der erste Temperatursensor angeordnet ist eine Temperatur des zugeführten Kathodengases vor dem zweiten Verdichter (150) zu messen und der zweite Temperatursensor angeordnet ist eine Temperatur des abgeführten Kathodengases vor der Turbine (155) zu messen, und das erste (161) und/oder zweite Dreiwegeventil (162) so gesteuert wird, dass die Temperatur des zweiten Temperatursensors maximal wird und/oder die Temperatur des ersten Temperatursensors minimal wird.

11. Verwendung eines Wärmetauschersystems (100, 200, 300, 400, 500, 600, 700) gemäß Anspruch 1-9 zur Versorgung einer mobilen Plattform mit elektrischer Energie.

12. Computerprogramm, umfassend Befehle, die bei der Ausführung des Computerprogramms durch einen Computer diesen veranlassen, das Verfahren nach Anspruch 10 auszuführen.

13. Maschinenlesbares Speichermedium, auf dem das Computerprogrammprodukt nach Anspruch 12 gespeichert ist.

## Claims

1. Heat exchanger system (100, 200, 300, 400, 500, 600, 700) for operating a fuel cell stack (190),
having:
a first compressor (142) and a second compressor (150) for the cathode gas fed to the fuel cell stack (190), wherein the second compressor (150) is arranged fluidically downstream of the first compressor (142);
a turbine (155) which is mechanically coupled to the second compressor (150) and against which cathode gas discharged from the fuel cell stack (190) flows;
a first heat exchanger (110) which is thermally coupled to the supplied cathode gas between the first compressor (142) and the second compressor (150);
a second heat exchanger (120) which is thermally coupled to the supplied cathode gas downstream of the second compressor (150);
a fourth heat exchanger (140) which is thermally coupled to the discharged cathode gas downstream of the turbine (155); wherein
the fourth heat exchanger (140) is thermally variably coupled to the first heat exchanger (110) and to the second heat exchanger (120) in order to control a heat exchange for cooling the first heat exchanger (110) and the second heat exchanger (120),
**characterized in that**
the fourth heat exchanger (140) is thermally variably coupled to both the first heat exchanger (110) and the second heat exchanger (120) by means of a coolant and a first three-way valve (161) in order to cool the cathode gas upstream and downstream of the second compressor (150).

2. Heat exchanger system (100, 200, 300, 400, 500, 600, 700) according to Claim 1, which has a third heat exchanger (130) which is thermally coupled to the discharged cathode gas in the fluid direction upstream of the turbine (155), and wherein the first heat exchanger (110) and the second heat exchanger (120) are thermally variably coupled to the third heat exchanger (130) in order to control a heat exchange for heating the third heat exchanger (130).

3. Heat exchanger system (100, 200, 400, 500, 600, 700) according to Claim 1 or 2, wherein the first heat exchanger (110) and the second heat exchanger (120) are thermally variably coupled to the third heat exchanger (130) by means of a coolant and a second three-way valve (162) in order to supply heat to the discharged cathode gas upstream of the turbine (155).

4. Heat exchanger system (100, 200, 300, 400, 500, 600, 700) according to Claim 1 or 2, wherein the second heat exchanger (120) is thermally coupled to the third heat exchanger (130) by means of a coolant in order to supply heat to the discharged cathode gas upstream of the turbine (155).

5. Heat exchanger system (100, 200, 300, 400, 500, 600, 700) according to one of the preceding claims, which has a coolant pump (165), and the thermal coupling by means of the coolant is configured to bring about a flow of the coolant between the first to fourth heat exchangers (110, 120, 130, 140) by means of the coolant pump (165).

6. Heat exchanger system (300) according to Claim 4, having a fifth heat exchanger (170), which is thermally coupled to the discharged cathode gas in the fluid direction upstream of the third heat exchanger (130) and is thermally coupled to the first heat exchanger (110) in order to absorb heat.

7. Heat exchanger system (300) according to Claim 6, wherein the fifth heat exchanger (170) is thermally coupled to the first heat exchanger (110) by means of the coolant.

8. Heat exchanger system (400, 500, 600, 700) according to one of the preceding claims, wherein a thermal coupling to a cooler assembly is inserted between the thermal coupling of the fourth heat exchanger (140) to the first (110) and the second heat exchanger (120).

9. Heat exchanger system (400, 500, 600, 700) according to Claim 8, wherein the cooler assembly has a power electronics cooler (410) and/or an inverter cooler and/or a motor cooler (420) and/or a converter cooler.

10. Method for controlling a heat exchanger system (100, 200, 300, 400, 500, 600, 700) according to one of the preceding claims, wherein the heat exchanger system (100, 200, 300, 400, 500, 600, 700) has a first temperature sensor and a second temperature sensor, and the first temperature sensor is arranged to measure a temperature of the supplied cathode gas upstream of the second compressor (150), and the second temperature sensor is arranged to measure a temperature of the discharged cathode gas upstream of the turbine (155), and the first (161) and/or second three-way valve (162) are/is controlled in such a way that the temperature of the second temperature sensor becomes maximum and/or the temperature of the first temperature sensor becomes minimum.

11. Use of a heat exchanger system (100, 200, 300, 400, 500, 600, 700) according to Claims 1 to 9 for supplying a mobile platform with electrical energy.

12. Computer program comprising instructions which, when the computer program is executed by a computer, cause the latter to perform the method according to Claim 10.

13. Machine-readable storage medium on which the computer program product according to Claim 12 is stored.

## Revendications

1. Système d'échangeur de chaleur (100, 200, 300, 400, 500, 600, 700) pour faire fonctionner un empilement de piles à combustible (190),
présentant :
un premier compresseur (142) et un deuxième compresseur (150) pour le gaz cathodique amené à l'empilement de piles à combustible (190), le deuxième compresseur (150) étant agencé fluidiquement en aval du premier compresseur (142) ;
une turbine (155) couplée mécaniquement au deuxième compresseur (150) et alimentée par le gaz cathodique évacué de l'empilement de piles à combustible (190) ;
un premier échangeur de chaleur (110) qui est couplé thermiquement au gaz cathodique amené entre le premier compresseur (142) et le deuxième compresseur (150) ;
un deuxième échangeur de chaleur (120) qui est couplé thermiquement au gaz cathodique amené après le deuxième compresseur (150) ;
un quatrième échangeur de chaleur (140) qui est couplé thermiquement au gaz cathodique évacué après la turbine (155) ;
le quatrième échangeur de chaleur (140) étant couplé de manière thermiquement variable au premier échangeur de chaleur (110) et au deuxième échangeur de chaleur (120) afin de commander un échange de chaleur pour refroidir le premier échangeur de chaleur (110) et le deuxième échangeur de chaleur (120),
**caractérisé en ce que**
le quatrième échangeur de chaleur (140) est couplé de manière thermiquement variable à la fois au premier échangeur de chaleur (110) et au deuxième échangeur de chaleur (120) au moyen d'un réfrigérant et d'une première soupape à trois voies (161) pour refroidir le gaz cathodique respectivement avant et après le deuxième compresseur (150).

2. Système d'échangeur de chaleur (100, 200, 300, 400, 500, 600, 700) selon la revendication 1, qui présente un troisième échangeur de chaleur (130) qui est couplé thermiquement au gaz cathodique évacué dans la direction du fluide en amont de la turbine (155), et dans lequel le premier échangeur de chaleur (110) et le deuxième échangeur de chaleur (120) sont couplés de manière thermiquement variable au troisième échangeur de chaleur (130) pour commander un échange de chaleur pour chauffer le troisième échangeur de chaleur (130).

3. Système d'échangeur de chaleur (100, 200, 400, 500, 600, 700) selon la revendication 1 ou 2, dans lequel le premier échangeur de chaleur (110) et le deuxième échangeur de chaleur (120) sont couplés de manière thermiquement variable au troisième échangeur de chaleur (130) au moyen d'un réfrigérant et d'une deuxième soupape à trois voies (162) pour amener de la chaleur au gaz cathodique évacué en amont de la turbine (155).

4. Système d'échangeur de chaleur (100, 200, 300, 400, 500, 600, 700) selon la revendication 1 ou 2, dans lequel le deuxième échangeur de chaleur (120) est couplé thermiquement au troisième échangeur de chaleur (130) au moyen d'un réfrigérant pour amener de la chaleur au gaz cathodique évacué en amont de la turbine (155).

5. Système d'échangeur de chaleur (100, 200, 300, 400, 500, 600, 700) selon l'une quelconque des revendications précédentes, qui présente une pompe à réfrigérant (165), et le couplage thermique au moyen du réfrigérant est adapté pour provoquer un écoulement du réfrigérant entre les premier à quatrième échangeurs de chaleur (110, 120, 130, 140) au moyen de la pompe à réfrigérant (165).

6. Système d'échangeur de chaleur (300) selon la revendication 4, avec un cinquième échangeur de chaleur (170) qui est couplé thermiquement au gaz cathodique évacué dans la direction du fluide en amont du troisième échangeur de chaleur (130) et couplé thermiquement au premier échangeur de chaleur (110) pour recevoir de la chaleur.

7. Système d'échangeur de chaleur (300) selon la revendication 6, dans lequel le cinquième échangeur de chaleur (170) est couplé thermiquement au premier échangeur de chaleur (110) au moyen du réfrigérant.

8. Système d'échangeur de chaleur (400, 500, 600, 700) selon l'une quelconque des revendications précédentes, dans lequel un couplage thermique avec un groupe de refroidissement est intercalé entre le couplage thermique du quatrième échangeur de chaleur (140) avec le premier (110) et le deuxième échangeur de chaleur (120).

9. Système d'échangeur de chaleur (400, 500, 600, 700) selon la revendication 8, dans lequel le groupe de refroidissement comprend un refroidisseur d'électronique de puissance (410) et/ou un refroidisseur d'onduleur et/ou un refroidisseur de moteur (420) et/ou un refroidisseur de convertisseur.

10. Procédé de commande d'un système d'échangeur de chaleur (100, 200, 300, 400, 500, 600, 700) selon l'une quelconque des revendications précédentes, dans lequel le système d'échangeur de chaleur (100, 200, 300, 400, 500, 600, 700) présente un premier capteur de température et un deuxième capteur de température, et le premier capteur de température est agencé pour mesurer une température du gaz cathodique amené en amont du deuxième compresseur (150) et le deuxième capteur de température est agencé pour mesurer une température du gaz cathodique évacué en amont de la turbine (155), et la première (161) et/ou la deuxième soupape à trois voies (162) sont commandées de telle sorte que la température du deuxième capteur de température devient maximale et/ou la température du premier capteur de température devient minimale.

11. Utilisation d'un système d'échangeur de chaleur (100, 200, 300, 400, 500, 600, 700) selon les revendications 1 à 9 pour fournir de l'énergie électrique à une plate-forme mobile.

12. Programme informatique, comprenant des instructions qui, lorsque le programme informatique est exécuté par un ordinateur, amènent ce dernier à exécuter le procédé selon la revendication 10.

13. Support de stockage lisible par machine, sur lequel est stocké le produit de programme informatique selon la revendication 12.
